# EUROPEAN PATENT APPLICATION

(11) **EP 1 271 938 A2**
(43) Date of publication of application: **02.01.2003**
(21) Application number: 02012485.5
(22) Date of filing: 12.06.2002
(51) Int. Cl.: H04N 5/44

(54) **Control of multiple AV-devices by a single master controller using infrared transmitted commands and bus transmitted commands**

(30) Priority: 18.06.2001 US 883533
(71) Applicant: MATSUSHITA ELECTRIC INDUSTRIAL CO., LTD., Kadoma-shi, Osaka 571-8501 (JP)
(72) Inventor: Srivastava, Gopal K., Cherry Hill, NJ 08060 (US)
(74) Representative: Schwabe - Sandmair - Marx

(57) **Abstract**

An audio-video platform (AVP) performs as a master controller to interconnect other AV devices and provide unified control of all the AV devices connected to it. The AVP receives all control signals from users and controls slave mode AV devices via an IEEE-1394 bus and master mode AV STBs by using an infrared (IR) blaster, having a command set equivalent to the infrared remote control of the master-mode AV device. The AVP also controls legacy devices via the IR blaster. The AVP has on screen display (OSD) and provides unified graphic user interface (GUI) for connected AV devices. The AVP can transfer compressed AV signals for processing and display in one common format, making it possible to display video from all AV devices.

## Description

### FIELD OF THE INVENTION

The present invention relates to the field of audio-video entertainment systems. More specifically, the present invention relates to master control of various audio-video components by a combination of bus transmitted commands and infrared transmitted commands.

### BACKGROUND OF THE INVENTION

A typical of home audio-video system includes a variety of electronic components. For example, a radio receiver, a compact disk (CD) player, a digital versatile disk (DVD) player, a pair of speakers, a television (TV) receiver, a video home system-video cassette recorder (VHS-VCR), etc. Typically these components are connected together via cables and one of the components is often considered to be the central or main component of the home audio-video system. The radio receiver often becomes the central component because it includes an AM/FM tuner, various amplifiers, volume adjust capability and multiple switching functions. The receiver has control buttons and switches on the front panel and in many cases, some or all of these buttons and switches are duplicated on a handheld remote control unit. The remote control unit can transmit, from a short distance, any button or switch selection to the receiver. A user can control the home equipment by manipulating the buttons and switches on the front of the receiver, or alternatively, manipulating buttons on the handheld remote control unit.

Home electronic devices for sale in today's market are more capable and more complex than a few years ago, and consumers have increased their demand for the devices because of the functions they provide. When a consumer purchases a new device, it is normally connected into the home audio-video system alongside of the older devices. The new device gets plugged into an open input on the back of the receiver, television monitor or some other device coupled to the receiver or monitor. The consumer controls the new device via the control switches on either the front panel of the new device or a remote control unit purchased with the new device. One problem with this equipment is the proliferation of remote control devices for the different components within the home audio-video system. An attempt to add a new device to the audio-video system often means another dedicated remote control unit for the user to keep track of, learn to operate and periodically replenish with fresh batteries.

It is desirable to provide a network that facilitates universal control of new and existing older devices integrated with each other. The Institute of Electrical & Electronic Engineers (IEEE) 1394 digital interface is a high-speed serial digital communications bus for interconnecting Audio-video (AV) devices such as, set top boxes (STBs), VCRs, CD players and other similar devices. The IEEE 1394 bus, is an ideal solution for home networks for easy interconnection of many AV devices. Most AV devices that are being developed in the market include the IEEE 1394 port. There are two types of AV devices that contain IEEE 1394 ports; namely, a master mode type and a slave mode type. The master mode type AV device can control slave mode AV devices in the network but the protocol of the master mode type AV device does not permit it to be controlled by commands from slave devices or even from other master mode AV devices. For example, an open cable STB (master mode type) has an IEEE 1394 port having control firmware that is designed to send control commands to other slave mode type AV devices such as the DVHS recorder. However, another master mode AV device, for example, a satellite STB can neither control nor be controlled by the open cable STB.

Devices which do not have IEEE 1394 interfaces can not be easily integrated into the user's audio-video system. Typically these devices require dedicated remote control devices and, so, are similar to the master mode type 1394 devices. This problem is widespread as master mode type configurations are commonly used in home entertainment equipment and many legacy devices that do not have 1394 interfaces are still in widespread use. A central control for all types of AV devices is desirable for user friendly control of all the AV devices interconnected for forming a home network system.

### SUMMARY OF THE INVENTION

The present invention is embodied in an audio-video platform (AVP) that performs as a master controller which has all the advantages of similarly employed devices and has none of the above described disadvantages. To attain this, the present invention provides a unique arrangement in the interconnecting of various AV devices. An AVP which includes an embodiment of the present invention has an IEEE-1394 port and firmware designed to work in master mode that solves the above-mentioned problems. The AVP is a master STB that is designed to interconnect other AV devices and provide unified user control of all the AV devices connected to it via a connecting bus such as the IEEE-1394 bus or the universal serial bus (USB) as well as by an infrared blaster. It has the advantage of being the master controller that receives all the control signals from the users. The exemplary AVP may be configured to provide an on screen display (OSD) which implements a unified graphic user interface (GUI) for all the connected AV devices. It has the capability to transfer compressed AV signals for processing and display in one common format, a feature that makes it possible to display video from all video-capable AV devices. The invention controls slave mode AV devices via the IEEE-1394 bus and master mode AV devices and legacy devices by using the infrared (IR) blaster. The AVP is programmed with the command sets for each device that is connected to it either through the network or through dedicated analog or digital signal lines.

### BRIEF DESCRIPTION OF THE DRAWINGS

With these and other aspects of the invention in view, as will hereinafter more fully appear, and which will be more particularly pointed out in the appended claims, reference is now made to the following description taken in connection with the accompanying drawings in which

Figure 1 is a block diagram of a preferred embodiment of the invention;

Figs. 2, 3, 4, and 5 are flow chart diagrams showing a sequence of processes of the AVP of the present invention; and

Figs. 6, 7, 8, 9 and 10 are screen displays of audio-video control menus displayed for use with the AVP remote control unit.

### DETAILED DESCRIPTION OF THE INVENTION

The present invention involves a system with which a user of a home entertainment system can control numerous audio video devices from a main or central control station called an audio-video platform (AVP). An audio-video device is a generic term used to describe electronic components of a home entertainment system as for example, a satellite STB, television monitor, DVHS VCR, CD player, etc. Many users have legacy audio-video devices that do not have digital links (i.e. a VHS-VCR, or a tuner/amplifier). On the other hand, many users are purchasing audio-video devices that use digital links for transferring compressed audio and video signals and can communicate with other audio-video devices over an interconnecting bus.

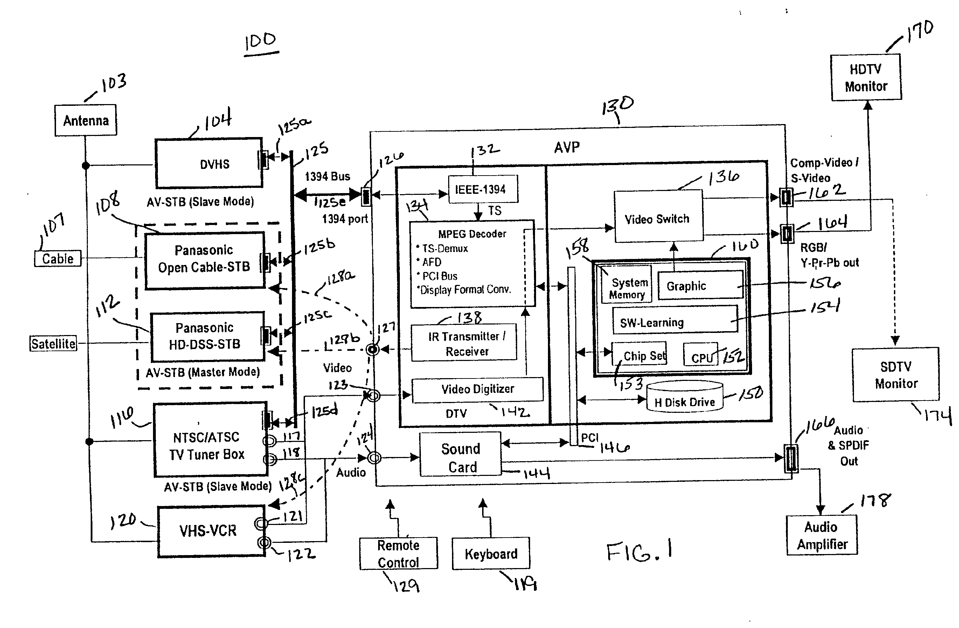

Fig. 1 shows a home AV network 100 in accordance with an exemplary embodiment of the present invention is shown. Network 100 includes nine devices, a digital VHS (DVHS) video tape recorder 104, an open cable STB 108, a high definition digital satellite system (HD-DSS) receiver 112, a National Television Standards Committee/Advanced Television Systems Committee (NTSC/ATSC) TV tuner 116, a video home system video cassette recorder (VHS-VCR) 120, an AVP 130, a standard definition television (SDTV) monitor 174, a high definition television (HDTV) monitor 170 and a multi-channel audio amplifier 178.

The IEEE 1394 serial bus 125, used by home AV network 100 of FIG. 1 is a high-speed bus architecture for interconnecting digital devices and provides a universal input/output connection for multiple devices. The IEEE 1394 bus 125 is an international hardware and software standard, having a digital interface for transporting data at 100, 200, or 400 megabits per second (Mbps). The 1394 bus is designed to integrate entertainment, communication, and computing electronics in a consumer multimedia system. The IEEE 1394 standard defines a digital interface for an application, allowing direct digital communication among devices that are coupled to the bus. The use of the IEEE-1394 Bus 125 facilitates the connection of audio-video devices to each other as it supports daisy chaining and branching for true peer-to-peer communication. In addition, it defines a scaleable architecture, that allows a user to mix 100, 200, and 400 Mbps devices on a single bus. The cable used by the IEEE 1394 standard is relatively thin in diameter compared to other bulkier cables used to connect such devices. Cable lengths range from 4 meters for copper cable to thousands of meters for glass optical fiber.

Devices can be added to and removed from an IEEE 1394 bus while the bus is active. If a device is so added or removed, the bus automatically reconfigures itself to transmit data between the existing nodes.

While the system is describe in terms of an IEEE 1394 bus, it is contemplated that other control and data bus systems such as the universal serial bus (USB), Ethernet bus or even parallel busses such as the Centronics bus may be used in place of the 1394 bus.

A node (i.e. an audio/video device) is considered a logical entity having a unique address on the bus. Each node provides an identification ROM, a standardized set of control registers, and its own address space. The IEEE 1394 communication standard of bus 125 shown in FIG. 1 supports asynchronous data transfers and isochronous data transfers of digitally encoded information. Asynchronous transfers are traditional data transfer operations which take place as soon as possible and transfer an amount of data from a source to a destination. Isochronous data transfers are real-time transfers which take place such that the time intervals between significant instances have the same duration at both the transmitting and receiving applications. Each packet of data transferred isochronously is transferred in its own time period.

An example of an application for isochronous data transfer is from a open cable STB 108 to a TV monitor 174. Open cable STB 108 receives a modulated and encoded video stream from a cable company and demodulates and decodes the video stream to produce streams of audio and video packets. These packets are transferred over the bus 125 for reproduction on the SDTV monitor 174 or HDTV monitor 170, as appropriate. The IEEE 1394 standard bus architecture provides multiple channels for isochronous data transfers between applications. Specifically, a source identifier and destination identifier is broadcast with the data to ensure reception by the appropriate application. This allows multiple applications to transmit isochronous data simultaneously across the bus structure.

Audio-video devices that are equipped with IEEE-1394 ports are most often designed to behave as masters that control other audio-video devices and receive the audio-video signal from them over the IEEE-1394 bus. AV devices 104, 108, 112, 116 and 130, are communicatively coupled via IEEE-1394 bus 125 through respective links 125a through 125e and can, in accordance with well-known IEEE-1394 bus protocol, communicate with any other device that is also coupled to bus 125. It is noted however that open cable STB 108 and HD-DSS 112 are master mode type devices having a bus protocol that does not permit receiving control information from another AV device. While bus 125 is shown as including five devices, it is understood that bus 125 may be adapted to include any number of devices up to the physical limits of the bus technology (e.g., 63 devices for IEEE 1394 as currently specified). Although not shown in Fig. 1, it is contemplated that the HDTV monitor 170 and SDTV monitor 174 may also be controlled by the AVP 130 via the bus 125 or IR blaster 138, as appropriate, and may receive data from the AVP 130 via the bus 125.

The AVP 130 is a STB that is provided to interconnect the other AV devices and to provide unified user control of all the AV devices connected to it via either the IEEE-1394 bus 125 or IR links 128a,128b and 128c and analog signal connections 123 and 124. An IEEE-1394 bus connector 126 is provided to permit connection to the IEEE-1394 link 125e for receiving digital data from AV devices 104, 108, 112, 116 and for transmitting digital control data to the DVHS player 104 and TV tuner 116. The AVP 130 includes an IEEE 1394 interface 132, an MPEG decoder/encoder 134, a video digitizer 142, an IR transmitter/receiver 138, a PCI bus 146, a sound card 144, a video switch 136, a non-volatile storage unit 150, such as a hard disk drive, and a control processor 160 which includes a central processing unit (CPU) 152, a PCI interface 153, system memory 158, a graphics processor 156 and a software learning module 154. The control processor 160 controls the other elements of the AVP 130, as described below and, through the IEEE 1394 interface 132 and the IR transmitter/receiver 138 controls all of the AV devices that are connected to the AVP 130.

To provide centralize control for, master mode and legacy devices, the AVP 130 takes advantage of the IR control capability of these devices. As a result total centralized control is achieved by using two techniques. The slave mode type AV devices are controlled by receiving commands via the IEEE-1394 bus and the master mode type devices are controlled by receiving commands via an IR transmission from IR transmitter/receive 138 via the IR receiver of the respective device.

As is typically the case, AV devices 104, 108, 112, and 116 are each provided with its own remote control unit. In the exemplary embodiment of the invention, the control of a legacy device or master mode device is enabled by registering the remote control devices with the AVP 130. Registration may occur automatically, for example, in a plug-and-play mode when the device identifier is read by the AVP after it has been connected to the 1394 bus or it may occur manually by specifying the device type to the AVP or by downloading the command set for master-mode devices, analog devices or legacy digital devices. The downloaded command set may be saved in memory 158 or on hard drive 150 of AVP 130.

The download may be accomplished, for example, by the AVP accessing the manufacturer's web site to obtain the command codes or by prompting the user to follow a menu driven procedure, displayed on TV monitor 174, which directs the user to depress particular keys or function buttons. The transmitted IR signals resulting from the keys and function buttons depressions are received and decoded by the device driver and the resulting codes correlated with the special functions of that particular remote control and stored in memory.

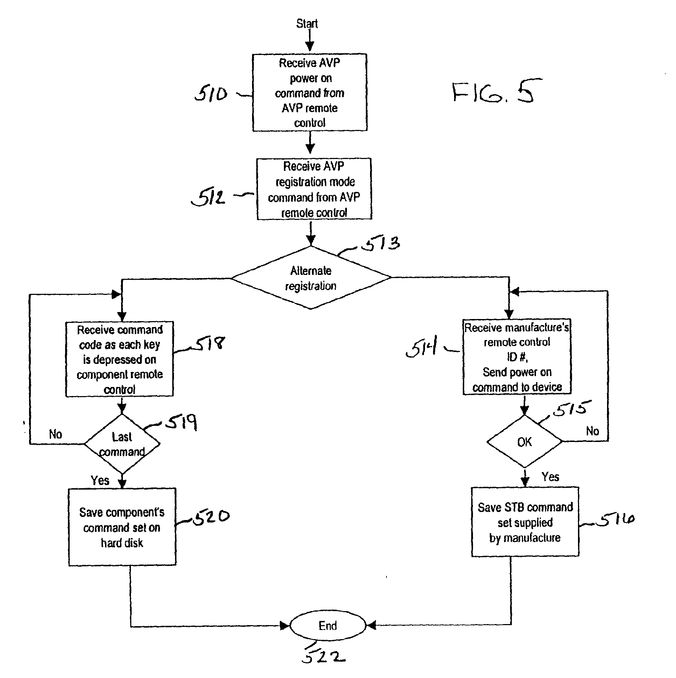

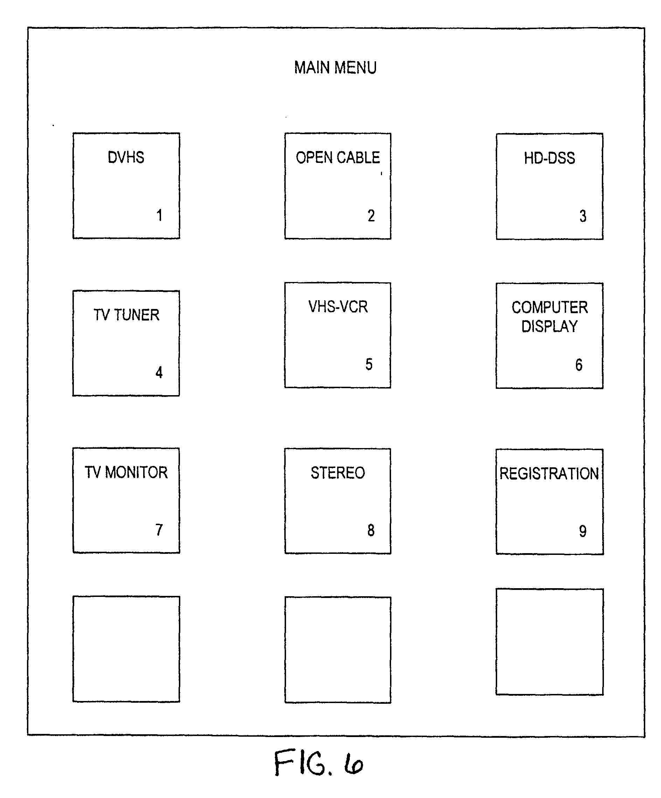

Fig. 5 illustrates an example of some processes that AVP 130 may use to register a the IR remote control commands for a component. A user selects the AVP power-on switch on AVP remote control unit 129 and at step 510 operational power is applied to AVP 130 and TV monitor 174. The OSD function of the AVP 130 displays a main menu on TV monitor 174 containing areas labeled with selectable functions or AV device names as shown in fig 6. In this example, each area of the main menu is identified with the name of a function or AV device type and an assigned component number in the lower right corner of the area. The displayed locations of the labeled areas may match the configuration of keys on the remote control device 129. For example the area bearing component number 9 corresponds with the name "registration". Thus, when the menu shown in Fig. 6 is displayed and the viewer presses the key on the remote control unit 129 labeled with the number 9, the registration function is selected.

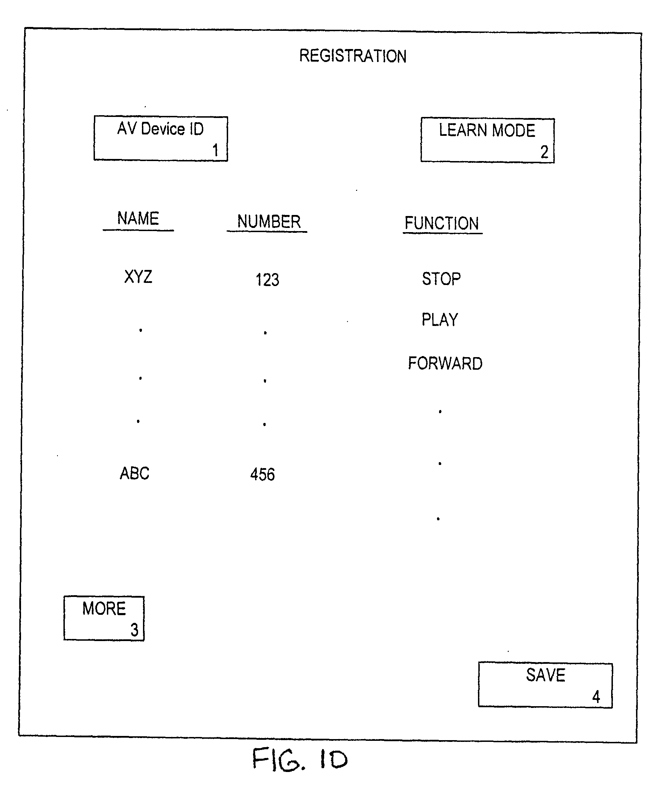

In this example, when the user selects the registration function, at step 512, the registration function menu is displayed. Referring to fig. 10 which shows details of the registration menu, the viewer selects "AV device" (number 1 of AVP remote control 129 keypad). At step 513, the viewer is prompted to select between registration from a list of devices or alternate registration. If the viewer selects the list registration, then, at step 514, a list is displayed of known AV devices for which the respective control codes have been pre-supplied and reside in memory (e.g. on the hard drive 150).

Also at step 514 the user selects one of the AV devices displayed in the menu, for example by typing in the ID number at the AVP keypad or by positioning a cursor over the displayed device number and pressing the "Enter" key. When a name and number is selected the AVP, also at step 514, attempts to send a power on control to the device related to the AV device. If the device is a slave mode device, the command is sent through the bus 125 otherwise it is sent through the IR blaster 138. If the device is connected to the bus 125, the AVP, at step 515 monitors the bus for a power on status message from the device. If the device is not connected to the bus 125, the AVP may prompt the viewer to press a particular key if the device has powered on. When, at step 515, the power on command is successful, the AVP, at step 516 stores the manufactures ID code as being the correct code for the AV device and the process ends. If the power on status or viewer response is not received within a short period the AVP prompts the user to select another ID number and the process repeats.

If the AV device ID is not available the alternate registration procedure may be selected at step 513. Briefly, this procedure prompts the user to press a particular function on the remote control unit for the selected device and records the transmitted IR signal as the control command for that function on the device. At step 518 using the dedicated remote control unit for the selected AV device the user is prompted to select a particular AV device type, for example, VCR, DVD player, Satellite receiver, etc. The user is then prompted to send a particular command using the devices dedicated remote control unit. If, for example, the user has indicated that the device being registered is a VCR, the user may be prompted to press the fast forward button. At step 519, as long as commands remain to be recorded, the AVP prompts the viewer to depress each key on the remote control unit so that the corresponding IR command may be recorded at step 518. The AVP may provide feedback to the viewer to indicate when a function command has been successfully recorded, for example by marking each successfully recorded function with a particular color, for example, green. At step 520 after all of the codes have been entered, the command set for the component is stored, for example in the memory 158 or hard disk drive 150.

The remote control device for the VHS-VCR 120 may be registered in the same manner as previously described for example, the unique remote control command set selected from a pre-stored set of device controls or is manually entered and saved in memory for recall when needed by a user. After registration, when a user chooses to control a particular master mode type device or legacy analog device the previously stored command set for the remote control of the device is recalled from either memory 158 or hard drive 150 and transmitted by IR transmitter/receiver 138 which acts, in combination with remote control unit 129 of the AVP 130, to control the device.

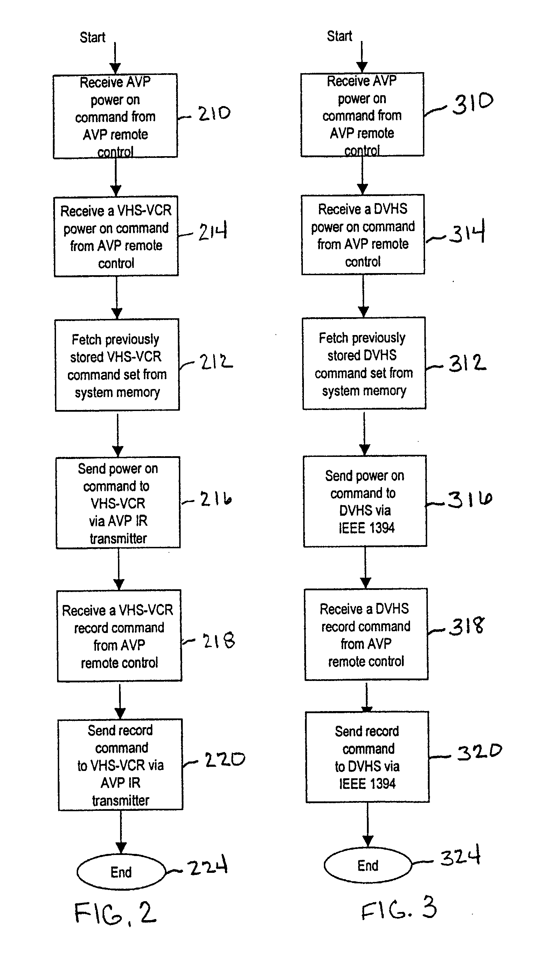

Fig. 2 illustrates an example of a process by which the AVP 130 may control the VHS-VCR 120. At step 210, the user selects the AVP power-on switch on AVP remote control 129 and power is applied to AVP 130 and the AVP 130 automatically applies power to a television monitor, for example, the HDTV monitor 170. The OSD displays a main menu on HDTV monitor 170 containing areas labeled with selectable functions and AV devices as shown in fig 6. As described above, each area of the exemplary main menu is identified with the name of a function or an AV device and an assigned component number in the lower right hand corner of the area. For example the area bearing component number 5 corresponds with the name "VHS-VCR". The user selects from the main menu, "VHS-VCR"(number 5, of AVP remote control 129 keypad) and at step 212 the previously stored command set for VHS-VCR 120 is retrieved from memory and, in one exemplary embodiment, the VHS-VCR function menu is displayed.

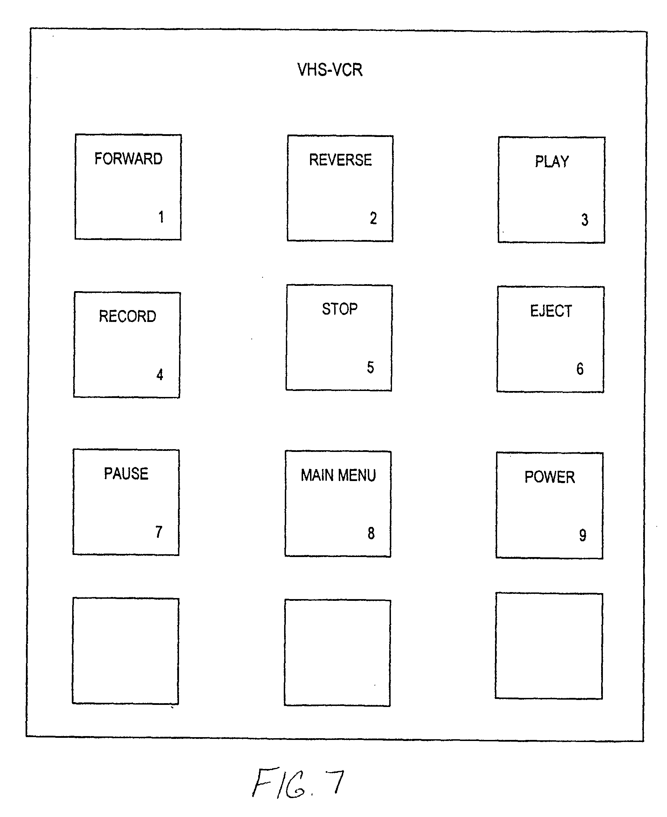

Referring to fig. 7 the user selects on VHS-VCR menu "power"(number 9, of AVP remote control 129 keypad). At step 214 power is applied to VHS-VCR 120. The AVP at step 216 sends the power-on command to the VHS-VCR via the IR transmitter/receiver 138. The user selects on VHS-VCR menu "record" (number 4, of AVP remote control 129 keyboard) at step 218 and the AVP at step 220 sends the record command to the VHS-VCR via the IR transmitter/receiver 138. The process flow for the example functions is ended. Other functions of the VHS-VCR are controlled by the AVP 130 in the same manner.

Although the exemplary embodiment of the invention has been shown as using an on-screen menu to guide the user in selecting the function to be performed by the selected device, it is contemplated that the remote control unit 129 of the AVP 130 may have control buttons for many types of devices and that some of these buttons may apply to multiple devices. For example, a set of buttons for fast-forward, rewind, play and stop may be shared by the VHS-VCR unit, an audio cassette deck and a DVHS unit. By depressing one of these buttons, an appropriate command is transmitted to the AVP where it is translated into the appropriate command for the device on the system. For example, the remote control may contain a "VCR" button. After this button is depressed ( or while it is held depressed), pressing the fast forward key will cause the AVP 130 to send an appropriate fast forward command to the VCR 120 via the IR blaster 138 of the AVP 130. If, however, the DVCR button on the remote control is pressed, then pressing the fast forward button causes the AVP 130 to send a fast forward command to the DVHS unit 104 via the 1394 bus.

VHS-VCR 120 is shown connected to TV antenna 103 for receiving an RF signal modulated with composite video. VHS-VCR 120 may also be connected to receive signals either from satellite antenna 102 or a broadband cable connector 107. VHS-VCR 120 records the received video signal onto tape and, by playback of the tape, provides an analog video signal from output port 121 and an analog audio signal from output port 122. Input connector 123 is connected to receive the analog video signal from the NTSC/ATSC TV tuner 116 and from VHS-VCR 120. Analog video signals from either device are processed in the same way. The VHS-VCR may also send analog audio and video signals derived from the received signals directly to the AVP 130 without first recording them.

For example, a video digitizer 142, may be connected to the internal side of connector 123 for receiving analog video signals. The exemplary video digitizer 142 includes a multiplexer for selecting video input either from the tuner 116 or VCR 120. Video digitizer 142 converts the standard baseband analog video signal into digital composite video data.

An MPEG coder/decoder (codec) 134 is connected to Video digitizer 142 to receive and, optionally, compress the digital composite video data. The functions of the MPEG codec 134 could be performed by any of a number of commercially available large scale integrated circuits, for example, the iTVC15, audio-video encoder/decoder device manufactured by iCompression Inc, or by a custom designed application specific integrated circuit (ASIC). The codec 134 provides real-time video and audio encoding and decoding that supports MPEG-1 and MPEG-2 and MPEG-1 layer II. The MPEG codec 134 can compress the received digital composite video data and transmit it, via the PCI bus 146, for storage on hard disk 150, for future recovery, alternatively, the digitized analog video signal can be scaled to present it as a window in a graphical user interface (GUI) or converted to an analog signal to provide to video switch 136 for connection to SDTV monitor 170. MPEG codec 134 performs format conversion to the video signals provided by the video digitizer to convert the video signals into a format suitable for display on an HDTV monitor 174.

Referring to Fig. 1, an input port 126 of AVP 130 is connected to receive compressed digital data from IEEE-1394 bus link 125e. An IEEE-1394 interface 132 is connected to input port 126 to receive and process the digital data and to provide a transport stream (TS) consisting of fixed length packets. Each packet has a header that contains, among the data, a sync byte, an error indicator, and a Packet Identifier (PID) that identifies the program bit-stream to which the packet belongs. A MPEG codec 134 is connected to receive, demultiplex, decode and format the decoded video to conform to the viewer's display format.

A demultiplexer (not shown) in codec 134 scans the incoming transport stream for the sync byte and then starts decoding the TS. The demultiplexer extracts the packets having the target PIDs and forms them into queued streams which are decoded into baseband video signals by the codec 134. A display format converter (not shown) in the codec 134 converts the received video signal to a format compatible with the selected video monitor 170 or 174. MPEG codec 134 is also connected to a PCI bus and can send compressed digital data via the PCI bus to a hard disk 150 for storage. The user can request recall of stored data into the MPEG codec 134 for decompressing and viewing via the video switch 136, as describe above. The hard disk driver 150 and CPU 152 may be used to implement a personal video recording system similar to that marketed by REPLAY TV, Inc.

A video switch 136 is connected to receive the formatted video output signal from MPEG codec 134 and an output graphic signal (e.g. an on-screen display menu) from graphics processor 156. Video switch 136 can connect either the signal provided by codec 134, the signal provided by graphics processor 156 or a combination of the two signals to either a component video/S-video output port 162 or to an RGB/Y-Pr-Pb output port 164. Compressed audio data from audio-video devices 104, 108, 112 are demultiplexed, decompressed and formatted for transmission on the PCI bus 146. A sound processor 144 is connected to receive the decompressed digital audio signal, convert it to an analog signal provide the analog signal as an output signal. Sound processor 144 provides the audio signal to output port 166. An audio amplifier 178 is connected to the audio output port 166 for amplifying the signal and providing it to the speakers.

The DVHS player 104 digitizes, compresses and records video signals onto tape or playing decompressed video signals from the tape a data rates as high as 14.1 Mbps. DVHS player 104 provides 500 lines of horizontal resolution and 3 times the color bandwidth of a super-VHS (S-VHS) device. Audio signals are also recorded digitally, and provide high quality sound. DVHS player 104 provides the audio and video digital data via IEEE 1394 bus 125a through connector 126 of AVP 130 to IEEE 1394 interface 132. MPEG codec 134 is connected to receive the transport stream (TS) from the IEEE 1394 interface 132. MPEG codec 134 demultiplexes, decodes and format converts the video and provides the video output signal to video switch 136. The video signal is then provided from switch 136 to either SDTV monitor 170 or HDTV monitor 174. The digitized audio from codec 134 is provided through the PCI bus 146 to sound card 144 where it is converted to analog signals and provided through connector 166 to stereo amplifier 178.

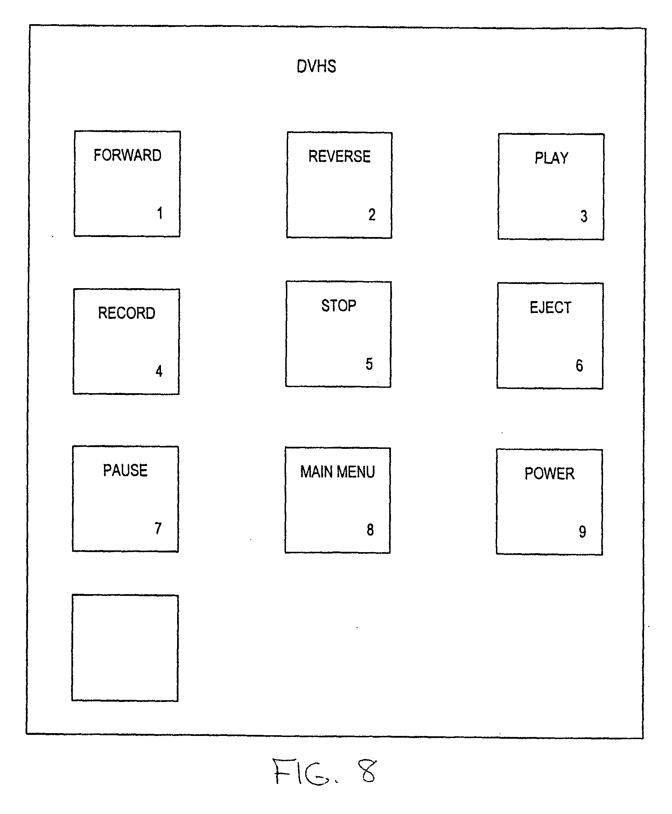

Fig. 3 illustrates an example of processes that may be used by the AVP 130 to control the DVHS device 104 as a typical slave mode type AV device. A user selects the AVP power-on switch of AVP remote control 129 and at step 310 causing power to be applied to the AVP 130 and HDTV monitor 170, as described above. The OSD displays a main menu on HDTV monitor 170 as shown in Fig. 6. The user selects from the main menu, "DVHS" (number 1, of AVP remote control 129 keypad) and at step 312 the previously stored command set for the DVHS unit 104 is retrieved from memory and the DVHS 104 function menu, shown in Fig. 8, is displayed. Referring to Fig. 8 the user selects on DVHS menu "power" (number 9, using AVP remote control 129 keypad), at step 314 power is applied to DVHS 104.

The AVP, at step 316, sends the power on command to the DVHS via the IEEE 1394 bus 125. The user selects the "record" function (number 4, of AVP remote control 129 keypad) at step 318 and the AVP at step 320 sends the record command to the DVHS via the bus 125. At this point, for the given example the process is ended. The digitized video and audio data are provided from DVHS 104 through IEEE 1394 bus 125, through the interface 132 and to MPEG codec 134. Although the control function has been shown as using an on-screen menu, it is contemplated that it may be implemented using buttons on the AVP remote control device 129, as described above.

Open cable STB 108 provides an integrated environment for broadcast services (analog and digital) and real-time interactive multimedia services, including internet protocol (IP) data services (program synchronous and asynchronous), IP voice communications, video telephony, and on-demand interactive applications. Open cable STB 108 receives multimedia information by tuning to one of many 6 MHz input channels available via an incoming cable connection 107. The transport stream (TS) of a tuned cable channel is sent to codec 134 via the 1394 bus 125e. The codec 134 decodes (decompresses) the audio and video signals. The decompressed video is then format converted to match the format of the viewer's display, 170 or 174.

Devices 108 and 112 are master mode AV devices and in addition to the IEEE 1394 bus connection for sending the data and status signals they are also configured to receive commands from the AVP 130 via respective infrared links 128a and 128b. Because the master mode protocol of open cable STB 108 does not permit the acceptance of external commands on the IEEE 1394 bus the present invention uses IR transmissions from IR transmitter/receiver 138 of the AVP 130 to control the open cable STB 108. As previously described, the open cable STB 108 has been previously registered and its entire command set is stored, for example, in hard disk drive 150 of AVP 130.

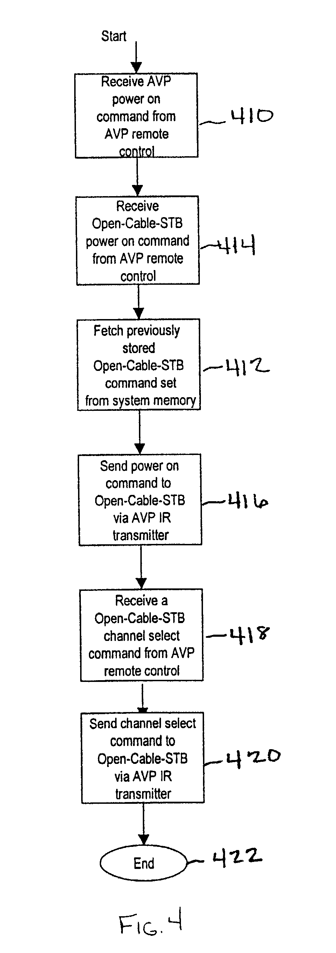

Fig. 4 illustrates how the AVP 130 controls the Open cable STB 108 as a typical master mode type STB. A user selects the AVP power-on switch of AVP remote control 129 and at step 410 the power is applied to AVP 130 and HDTV monitor 170, as described above. The OSD displays a main menu on TV monitor 174 containing areas labeled with selectable functions or AV devices as described above with reference to Fig. 6. The user selects "Open cable"(number 2, of AVP remote control 129 keyboard) and at step 412 the previously stored command set for Open cable STB 108 is retrieved from memory and the Open cable STB 108 function menu is displayed.

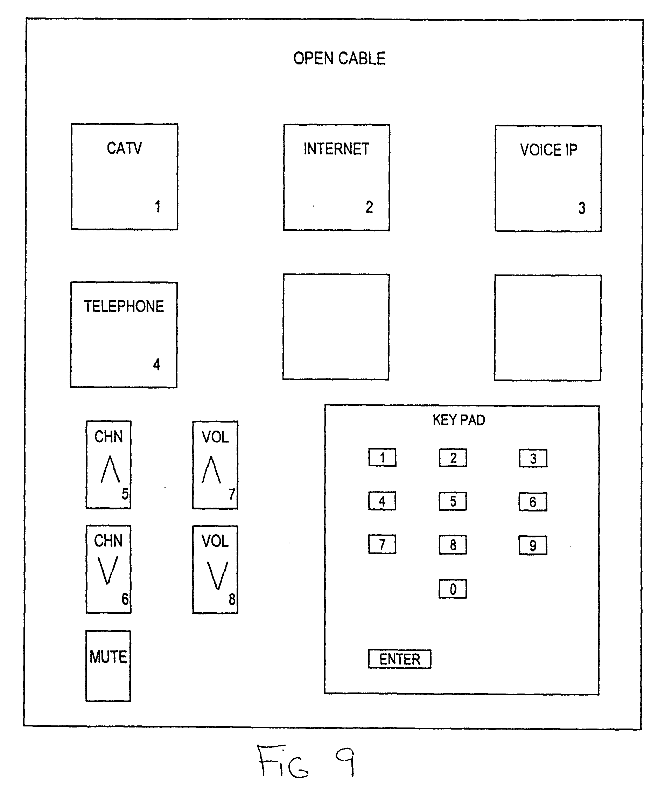

Referring to Fig. 9 the user selects from Open cable menu "CATV"(number 1, of AVP remote control 129, keypad) at step the AVP sends a command to the Open cable STB 108 to turn itself on. The AVP, at step 416, sends the power on command to the Open cable STB 108 via the IR transmitter/receiver 138. The user then selects, on the open cable menu "keypad"(number 0 and number 6, (indicating channel 6) of AVP remote control 129 keypad) at step 418 and the AVP at step 420 sends the channel select command to the Open cable STB 108 via the IR transmitter/receiver 138 to cause the STB 108 to tune to channel 6. At step 422 for the functions selected the example processes is ended. As described above, the digital audio and video data is transferred between the STB 108 and the AVP 130 via the bus 125.

TV antenna 103 provides an RF input signal to an input port of NTSC/ATSC TV tuner 116. TV tuner 116 demodulates and digitizes the composite video signal and provides both the analog and digitized versions of the video signal to IEEE-1394 bus link 125 and analog video signal to output port 117. If an ATSC television signal is received, the tuner 116 may decode and demodulate the trellis coded vestigal-sideband modulated ATSC signal to provide a transport stream for the selected television program. This transport stream is provided to the AVP 130 via the bus 125. Device 116 also provides analog video and audio signals to the AVP 130. Because the NTSC/ATSC TV Tuner 116 is a slave mode device, it is controlled via the 1394 bus 125 in the same way as the DVHS player 104.

A high definition digital satellite system (HD-DSS) receiver 112 is connected to a satellite antenna for receiving MPEG compressed digital component video signals from a satellite. (HD-DSS) receiver 112 demodulates the tuned channel and provides a transport stream containing compressed audio and video information. The digital video and audio signals in the transport stream (TS) provided by HD-DSS receiver 112 are transferred via the IEEE-1394 bus 125. The HD-DSS receiver 112 is a master-mode device and may be controlled by the AVP 130 using IR commands in the same manner as the open cable STB 108, described above.

SDTV monitor 174 and HDTV monitor 170 are connected to the AVP 130 via video and audio cables for viewing a composite video signal; S-video (Y/C or luminance/chrominance) signal; red, green, blue (RGB) component signals and luminance (Y), color difference signals (Pr and Pb), (Y-Pr-Pb). The present invention allows a user to connect AV devices having different formats and different control schemes to a common display. Any format conversion that is needed to display a video image sequence on the selected monitor is performed in the MPEG codec 134. The user need not be concerned with the video format of the audio-video device when connected in this manner. The various television monitors are also controlled by the AVP 130 using either the IR blaster 138 or the 1394 bus 125, as described above. In addition, when the television monitor is registered, the AVP knows its aspect ration and the video signals that it can display. As discussed above the MPEG codec 134 includes a format converter (not shown) that changes the format of the output video signal to match the format of the selected display device.

A software learning module 154 is connected to receive and save custom setup procedures that a user routinely performs to interconnect various configurations of components together for accomplishing a specific purpose. For example one use of the present invention may be to watch television on a selected channel, simultaneously record another channel and go on the internet to order a product just advertised on the selected channel. Using the learning module 154 the steps required may be performed once and recorded as a macro and saved in the software learning module 154. A simpler example may be illustrated in the context of watching a prerecorded tape using the DVHS player 104. In terms of the example described above, a viewer may simply press a DVHS button on the remote control device 129 to send power-on commands to the AVP 130, DVHS player 104, HDTV monitor 170 and multichannel audio amplifier 178. In addition the single button press may cause the AVP to send a "play" command to the DVHS player 104 and set the multiplexers in the MPEG codec 134 and sound card 144 to process the signals provided by the DVHS player.

While preferred embodiments of the invention have been shown and described herein, it will be understood that such embodiments are provided by way of example only. Numerous variations, changes, and substitutions will occur to those skilled in the art without departing from the spirit of the invention as defined by the appended claims.

## Claims

1. An audio/video platform (AVP) for a video signal processing system, comprising:
a digital communications port for transferring control and data signals between the AVP and at least a first video device;
at least one analog video communications port for transferring video signals between a second video device and the AVP;
an infrared transmitter for transmitting infrared commands; and
a control processor coupled to the digital video communications port and to the infrared transmitter for sending control commands to the first video device via the digital communications port and for sending control commands to the second video device via the infrared transmitter.

2. An audio/video platform according to claim 1, wherein the digital communications port receives data signals from at least a third video device and the control processor is configured to control the third video device via the infrared transmitter.

3. An audio/video platform according to claim 2, wherein the digital communications port is an IEEE 1394 bus which is configured to send and receive control and data signals to the first video device as a slave device and to receive data signals from the third video device as a master device.

4. An audio/video platform according to claim 1, further including a memory for storing respective command sets for the first and second video devices.

5. An audio/video platform according to claim 1, wherein the digital communications port is configured to receive a transport stream as specified by the moving pictures experts group (MPEG) via the digital communications port and the audio/video platform further comprises an MPEG decoder which processes the MPEG transport stream to generate a video output signal.

6. An audio/video platform according to claim 5, further comprising:
a remote control device for sending remote control commands to the audio/video platform; and
a graphics processor for generating on-screen display signals;
wherein the control processor generates on-screen display signals which display control commands for a selected one of the first and second video devices using the graphics processor and responds to corresponding commands from the remote control device to transmit corresponding commands to the selected one of the first and second video devices.

7. An audio/video platform according to claim 5, further comprising a remote control device for sending remote control commands to the audio/video platform, the remote control device including control switches for controlling the first and second video devices, wherein the control processor transmits control signals to the first and second video devices responsive to respective commands received from the remote control device to control the first and second video devices.

8. A method for controlling a plurality of video devices from an audio/video platform, wherein a first group of the plurality of video devices include respective digital communications ports and are configured as slave mode devices and a second group of the plurality of video devices include respective digital communications ports and are configured as master mode devices, at least the second group of video devices including an infrared receiver which responds to commands transmitted by an infrared remote control device, the method comprising the steps of:
transmitting digital commands to the first group of the plurality of video devices using the digital communications port; and
transmitting infrared commands to the second group of the plurality of video devices.

9. A method according to claim 8, further including the steps of:
displaying a command menu for a selected one of the first and second groups of video devices;
receiving infrared commands corresponding to the displayed command menu; and
translating the received commands into respective commands for the selected one of the first and second groups of video devices and transmitting the translated commands to the selected one of the first and second groups of video devices.

10. A method according to claim 8, wherein the plurality of devices further includes a third group of devices that does not include a digital communications port but does include a further infrared receiver which responds to commands transmitted by a further infrared remote control device, the method further comprising the step of transmitting infrared commands to the third group of the plurality of devices.

11. A method according to claim 10, further comprising the steps of:
registering the first, second and third video devices to identify respective command sets for the first, second and third video devices;
storing the identified command sets for the first, second and third video devices into a memory;
responsive to a request to transmit a control signal to a selected one of the first, second and third video devices, retrieving the identified command set for the selected video device from the memory;
associating the control signal with a command from the retrieved command set; and
transmitting the associated command to the selected one of the first, second and third video devices.

12. A method according to claim 11, wherein the first and second video devices send data to the audio/video platform via the digital communications port and the third video device sends data to the audio/video platform via an analog data port, and the method further includes the steps of:
configuring the audio/video platform to receive data from the digital communications port when one of the first and second video devices is selected; and
configuring the audio/video platform to receive data from the analog data port when the third video device is selected.
